# EUROPEAN PATENT APPLICATION

(11) **EP 3 805 584 A1**
(43) Date of publication of application: **14.04.2021**
(21) Application number: 18929306.1
(22) Date of filing: 25.09.2018
(51) Int. Cl.: F16C 29/04, A47B 88/493

(54) **BUFFER SLIDING RAIL WITH CONSTANT FRICTION NOISE REDUCTION MECHANISM**

(30) Priority: 08.08.2018 CN 201810898914
(71) Applicant: Guangdong SACA Precision Manufacturing Co., Ltd., Foshan, Guangdong 528311 (CN)
(72) Inventor: CAI, Gengxi, Foshan, Guangdong 528311 (CN); WU, Yi Tai, aiwan 300 (CN); LUN, Kaicheng, Foshan, Guangdong 528200 (CN); LI, Jiyi, Gaozhou, Guangdong 525200 (CN)
(74) Representative: Kurig, Thomas
(86) International application number: PCT/CN2018/107322
(87) International publication number: WO 2020/029393

(57) **Abstract**

The present invention provides a buffer slide rail with a fixed friction silencing mechanism, comprising an upper rail, a middle rail and a lower rail which are in sliding connection in sequence, wherein a transmission lower bead nest in transmission connection with the middle rail is assembled on the lower rail, and a transmission upper bead nest in transmission connection with the upper rail is assembled on the middle rail, wherein a fixed friction silencing assembly for reducing an axial moving speed is arranged between the connection of the upper rail and the middle rail, the fixed friction silencing assembly including an abrasion-resistant convex block and a connecting convex block, wherein the abrasion-resistant convex block comes into soft contact with or is separated from the connecting convex block as the upper rail moves. The structure is simple, to increase fixed friction between the upper rail and the middle rail, reduce an axial moving speed, achieve a silencing effect, as well as ensure that the upper rail and the middle rail are opened or closed on the lower rail in sequence, improve the transmission stability of the slide rail, and guarantee the normal use of a drawer.

## Description

### Technical Field

The present invention relates to the field of slide rails, particularly to a buffer slide rail with a fixed friction silencing mechanism.

### Background

Because of being installed on a side surface of a drawer in general, being easy in installation and saving space, a slide rail is widely applied to transmission and connecting components of furniture and industrial production, especially a three-section slide rail. A traditional three-section slide rail comprises an upper rail, a middle rail and a lower rail which are embedded in sequence, wherein the upper rail is installed on a drawer, the lower rail is installed on a cabinet, and the middle rail, as a bearing rail, is in sliding connection between the upper rail and the lower rail, to extend a moving range of the drawer and enable the upper rail and the middle rail to slide back and forth with respect to the lower rail in an axial direction of the lower rail.

In the process, in order to make transmission smoother, a transmission lower bead nest in transmission connection with the middle rail may be assembled on the lower rail, and a transmission upper bead nest in transmission connection with the upper rail may be assembled on the middle rail.

However, in an actual operation, due to different forces of pushing and pulling the slide rail, the axial moving speed of the upper rail and the middle rail is caused to be too fast, so that the upper rail and the middle rail cannot be opened or closed on the lower rail in sequence, specifically as follows: the upper rail slides out before the middle rail during opening and the middle rail is reset and closed before the upper rail during closing, so that the middle rail is easy to deform under the action of a large moment during opening or closing, meanwhile, a loud noise is made due to a collision between limit stops for limiting the transmission upper bead nest in the middle rail and the upper rail, the stability of transmission is reduced, even the slide rail is damaged, causing the slide rail to fail, affecting the normal use of a drawer.

### Summary

### Technical Problem

An object of the present invention is to overcome the defect in the prior art and provide a buffer slide rail with a fixed friction silencing mechanism. The structure of the buffer slide rail is simple, to increase fixed friction between an upper rail and a middle rail, reduce an axial moving speed, achieve a silencing effect, as well as ensure that the upper rail and the middle rail are opened or closed on a lower rail in sequence, improve the transmission stability of the slide rail, and guarantee the normal use of a drawer.

### Solution to Problem

### Technical Solution

The object of the present invention is realized by following technical solution: a buffer slide rail with a fixed friction silencing mechanism, comprising an upper rail, a middle rail and a lower rail which are in sliding connection in sequence, wherein a transmission lower bead nest in transmission connection with the middle rail is assembled on the lower rail, and a transmission upper bead nest in transmission connection with the upper rail is assembled on the middle rail, wherein a fixed friction silencing assembly for reducing an axial moving speed is arranged between the connection of the upper rail and the middle rail, the fixed friction silencing assembly including an abrasion-resistant convex block and a connecting convex block, wherein the abrasion-resistant convex block comes into soft contact with or is separated from the connecting convex block as the upper rail moves.

According to above optimization, the abrasion-resistant convex block is located between the sliding connection of the transmission upper bead nest and is fixedly buckle-mounted on an upper surface of the middle rail, and the connecting convex block is integrated in one piece on a bottom surface of the upper rail and comes into soft contact with or is separated from the abrasion-resistant convex block as the upper rail moves.

Alternatively, the abrasion-resistant convex block is located between the sliding connection of the transmission upper bead nest and is fixedly embedded at a left side or right side of the middle rail, and the connecting convex block is integrated in one piece on an inner side surface of the upper rail and comes into soft contact with or is separated from the abrasion-resistant convex block as the upper rail moves.

Alternatively, the connecting convex block is located between the sliding connection of the transmission upper bead nest and is integrated in one piece on an upper surface of the middle rail, and the abrasion-resistant convex block is fixedly assembled on a bottom surface of the upper rail and comes into soft contact with or is separated from the connecting convex block as the upper rail moves.

According to above optimization, the abrasion-resistant convex block is at least one hollow trapezoidal soft abrasion-resistant sheet. Alternatively, the abrasion-resistant convex block is at least one trapezoidal soft abrasion-resistant sheet.

Alternatively, the abrasion-resistant convex block is at least one cylindrical soft abrasion-resistant sheet.

According to above optimization, the connecting convex block is at least one arc convex block, and an arc surface of the arc convex block comes into soft contact or is separated from the abrasion-resistant convex block.

Alternatively, the connecting convex block is a connecting square block with an abrasion-resistant corrugated surface, and the abrasion-resistant corrugated surface comes into soft contact with or is separated from the abrasion-resistant convex block.

Alternatively, the connecting convex block is a connecting strip block with a plurality of tooth blocks, and the plurality of tooth blocks come into soft contact with or are separated from the abrasion-resistant convex block.

### Advantageous Effects of Invention

### Advantageous Effects

The present invention has the advantages that: by means of structure cooperation between the abrasion-resistant convex block and the connecting convex block of the fixed friction silencing assembly, during the opening or closing of the slide rail, the abrasion-resistant convex block comes into contact with or is separated from the connecting convex block as the upper rail axially moves, to increase fixed friction between the upper rail and the middle rail, reduce an axial moving speed, achieve a silencing effect, as well as ensure that the upper rail and the middle rail are opened or closed on the lower rail in sequence, improve the transmission stability of the slide rail, and guarantee the normal use of a drawer.

### Brief Description of Drawings

### Description of Drawings

Fig. 1 is a structural schematic diagram of embodiment 1 of the present invention.
Fig. 2 is a sectional view of embodiment 1 of the present invention.
Fig. 3 is a partial enlarged view of Fig. 2 in embodiment 1 of the present invention.
Fig. 4 is a sectional view of embodiment 2 of the present invention (with lower rail omitted).
Fig. 5 is a partial enlarged view of Fig. 4 in embodiment 2 of the present invention (with lower rail omitted).
Fig. 6 is a sectional view of embodiment 3 of the present invention (with lower rail omitted).
Fig. 7 is a partial enlarged view of Fig. 6 in embodiment 3 of the present invention (with lower rail omitted).
Fig. 8 is a sectional view of embodiment 4 of the present invention (with lower rail omitted).
Fig. 9 is a partial enlarged view of Fig. 8 in embodiment 4 of the present invention (with lower rail omitted).
Fig. 10 is a sectional view of embodiment 5 of the present invention (with lower rail omitted).
Fig. 11 is a partial enlarged view of Fig. 10 in embodiment 5 of the present invention (with lower rail omitted).
Fig. 12 is a sectional view of embodiment 6 of the present invention (with lower rail omitted).
Fig. 13 is a partial enlarged view of Fig. 12 in embodiment 6 of the present invention (with lower rail omitted).
Fig. 14 is a sectional view of embodiment 7 of the present invention (with lower rail and partial upper rail omitted).
Fig. 15 is a partial enlarged view of Fig. 14 in embodiment 7 of the present invention (with lower rail and partial upper rail omitted).
Fig. 16 is a sectional view of embodiment 8 of the present invention (with lower rail and partial upper rail omitted).
Fig. 17 is a partial enlarged view of Fig. 16 in embodiment 8 of the present invention (with lower rail and partial upper rail omitted).
Fig. 18 is a sectional view of embodiment 9 of the present invention (with lower rail and partial upper rail omitted).
Fig. 19 is a partial enlarged view of Fig. 18 in embodiment 9 of the present invention (with lower rail and partial upper rail omitted).
Fig. 20 is a sectional view of embodiment 10 of the present invention (with lower rail and partial upper rail omitted).
Fig. 21 is a partial enlarged view of Fig. 19 in embodiment 10 of the present invention (with lower rail and partial upper rail omitted).
Fig. 22 is a sectional view of embodiment 11 of the present invention (with lower rail omitted).
Fig. 23 is a partial enlarged view of Fig. 22 in embodiment 11 of the present invention (with lower rail omitted).
Fig. 24 is a sectional view of embodiment 12 of the present invention (with lower rail omitted).
Fig. 25 is a partial enlarged view of Fig. 24 in embodiment 12 of the present invention (with lower rail omitted).
Fig. 26 is a sectional view of embodiment 13 of the present invention (with lower rail omitted).
Fig. 27 is a partial enlarged view of Fig. 26 in embodiment 13 of the present invention (with lower rail omitted).
Fig. 28 is a sectional view of embodiment 14 of the present invention (with lower rail omitted).
Fig. 29 is a partial enlarged view of Fig. 28 in embodiment 14 of the present invention (with lower rail omitted).

### Optimal Embodiments for Implementing Invention

### Best Mode

The present invention will be further described as below with reference to the drawings.

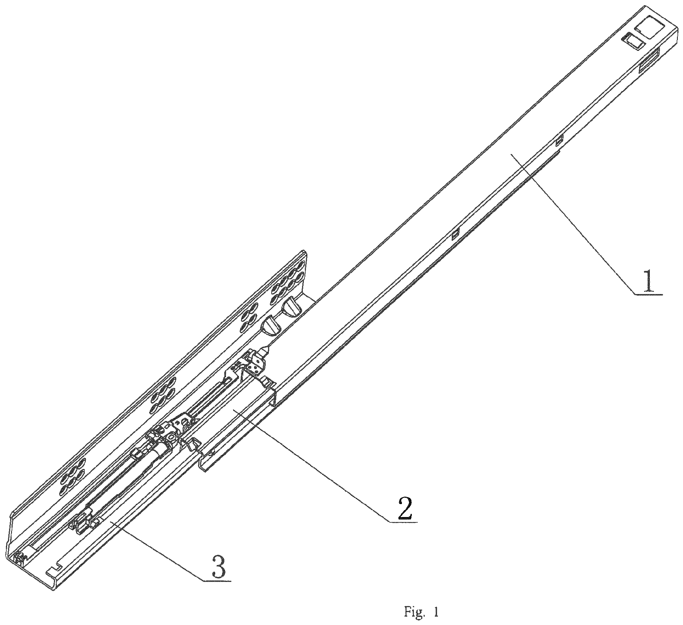

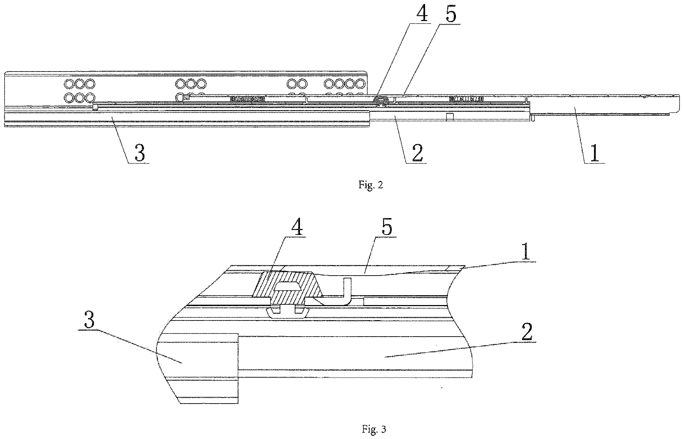

As shown in Fig. 1-Fig. 29, a buffer slide rail with a fixed friction silencing mechanism of the present invention, comprising an upper rail 1, a middle rail 2 and a lower rail 3 which are in sliding connection in sequence, wherein a transmission lower bead nest in transmission connection with the middle rail 2 is assembled on the lower rail 3, and a transmission upper bead nest in transmission connection with the upper rail 1 is assembled on the middle rail 2, wherein a fixed friction silencing assembly for reducing an axial moving speed is arranged between the connection of the upper rail 1 and the middle rail 2, the fixed friction silencing assembly including an abrasion-resistant convex block 4 and a connecting convex block 5, wherein the abrasion-resistant convex block 4 comes into soft contact with or is separated from the connecting convex block 5 as the upper rail 1 moves.

As shown in Fig. 1-Fig. 3, the abrasion-resistant convex block 4 is located between the sliding connection of the transmission upper bead nest and is fixedly buckle-mounted on an upper surface of the middle rail 2, and the connecting convex block 5 is integrated in one piece on a bottom surface of the upper rail 1 and comes into soft contact with or is separated from the abrasion-resistant convex block 4 as the upper rail 1 moves.

That is, during the opening or closing of the slide rail, the connecting convex block 5 comes into soft contact with the abrasion-resistant convex block 4 as the upper rail 1 axially moves, to increase fixed friction in up and down directions between the upper rail 1 and the middle rail 2, reduce an axial moving speed, and achieve a silencing effect. Then, under sufficient pushing force, the abrasion-resistant convex block 4 is deformed, so that the connecting convex block 5 goes over the abrasion-resistant convex block 4 and is separated from the abrasion-resistant convex block 4, to ensure that the upper rail 1 and the middle rail 2 are opened or closed on the lower rail 3 in sequence, improve the transmission stability of the slide rail, and guarantee the normal use of a drawer.

Wherein, the abrasion-resistant convex block 4 is at least one hollow trapezoidal soft abrasion-resistant sheet, a top short horizontal plane of the hollow trapezoidal soft abrasion-resistant sheet comes into contact with the connecting convex block 5, and a bottom long horizontal plane of the hollow trapezoidal soft abrasion-resistant sheet is buckle-mounted on the upper surface of the middle rail 2. The connecting convex block 5 is an arc convex block, and an arc surface of the arc convex block comes into soft contact with or is separated from the abrasion-resistant convex block 4. The contact area between the abrasion-resistant convex block 4 and the arc convex block is increased, to increase fixed friction in up and down directions between the upper rail 1 and the middle rail 2, reduce an axial moving speed, and achieve a silencing effect. Meanwhile, the abrasion-resistant convex block 4 is hollowly set, to ensure that the upper rail 1 and the middle rail 2 are opened or closed on the lower rail 3 in sequence, improve the transmission stability of the slide rail, and guarantee the normal use of a drawer.

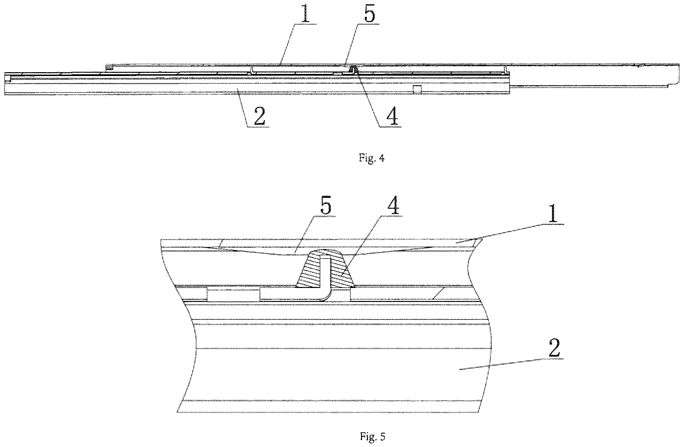

As shown in Fig. 4-Fig. 5, embodiment 2 is different from the above-mentioned embodiment in that: the abrasion-resistant convex block 4 is at least one trapezoidal soft abrasion-resistant sheet, a top short horizontal plane of the trapezoidal soft abrasion-resistant sheet comes into contact with the connecting convex block 5, and a bottom long horizontal plane of the trapezoidal soft abrasion-resistant sheet is buckle-mounted on the upper surface of the middle rail 2. The connecting convex block 5 is an arc convex block, and an arc surface of the arc convex block comes into soft contact with or is separated from the abrasion-resistant convex block 4. Similarly, the contact area between the abrasion-resistant convex block 4 and the arc convex block is increased, to increase fixed friction in up and down directions between the upper rail 1 and the middle rail 2, reduce an axial moving speed, and achieve a silencing effect; as well as ensure that the upper rail 1 and the middle rail 2 are opened or closed on the lower rail 3 in sequence, improve the transmission stability of the slide rail, and guarantee the normal use of a drawer.

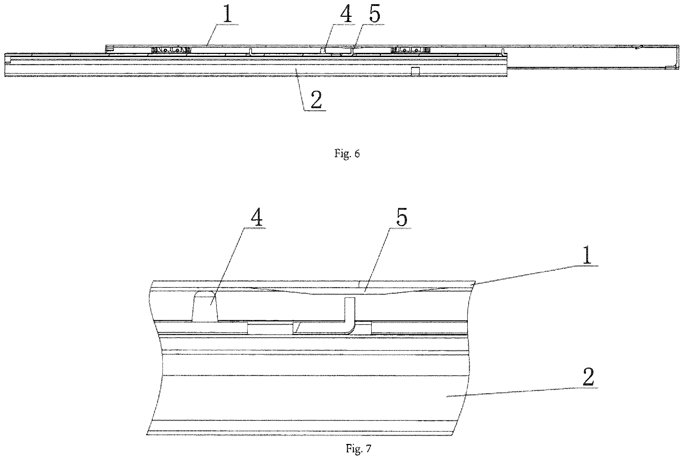

As shown in Fig. 6 and Fig. 7, embodiment 3 is different from the above-mentioned embodiment in that: the abrasion-resistant convex block 4 is at least one cylindrical soft abrasion-resistant sheet. The connecting convex block 5 is an arc convex block, and an arc surface of the arc convex block comes into soft contact with or is separated from the abrasion-resistant convex block 4. Similarly, fixed friction in up and down directions between the upper rail 1 and the middle rail 2 is increased, to reduce an axial moving speed, and achieve a silencing effect; as well as ensure that the upper rail 1 and the middle rail 2 are opened or closed on the lower rail 3 in sequence, improve the transmission stability of the slide rail, and guarantee the normal use of a drawer.

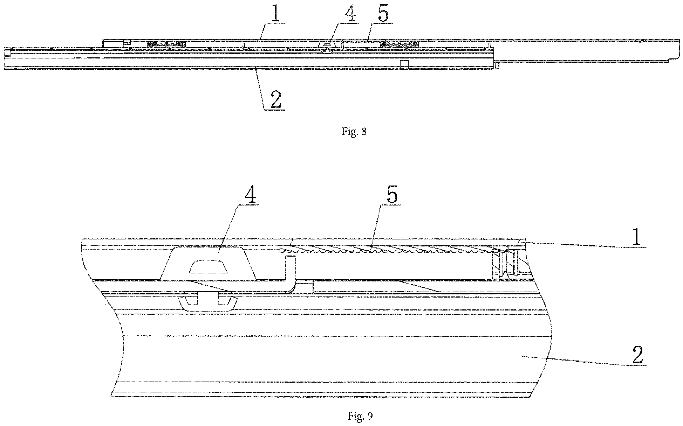

As shown in Fig. 8 and Fig. 9, embodiment 4 is different from the above-mentioned embodiment in that: the abrasion-resistant convex block 4 is at least one hollow trapezoidal soft abrasion-resistant sheet. A top short horizontal plane of the hollow trapezoidal soft abrasion-resistant sheet comes into contact with the connecting convex block 5, and a bottom long horizontal plane of the hollow trapezoidal soft abrasion-resistant sheet is buckle-mounted on the upper surface of the middle rail 2. The connecting convex block 5 is a connecting square block with an abrasion-resistant corrugated surface, and the abrasion-resistant corrugated surface comes into soft contact with or is separated from the abrasion-resistant convex block 4. The contact area between the abrasion-resistant convex block 4 and the arc convex block is increased, to further increase fixed friction in up and down directions between the upper rail 1 and the middle rail 2, reduce an axial moving speed, and achieve a silencing effect. Meanwhile, the abrasion-resistant convex block 4 is hollowly set, to ensure that the upper rail 1 and the middle rail 2 are opened or closed on the lower rail 3 in sequence, improve the transmission stability of the slide rail, and guarantee the normal use of a drawer.

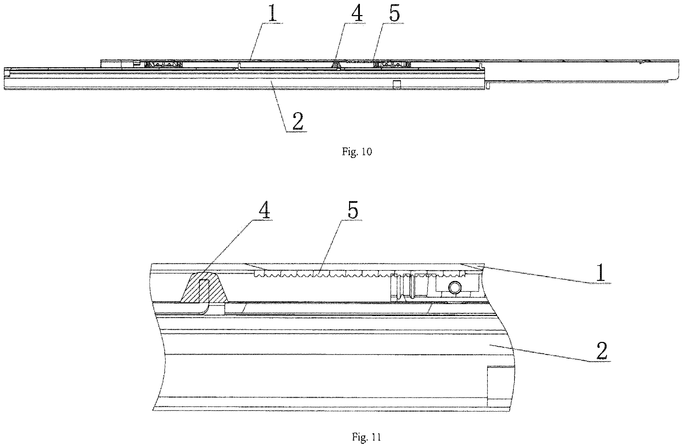

As shown in Fig. 10 and Fig. 10, embodiment 5 is different from the above-mentioned embodiment in that: the abrasion-resistant convex block 4 is at least one trapezoidal soft abrasion-resistant sheet. A top short horizontal plane of the trapezoidal soft abrasion-resistant sheet comes into contact with the connecting convex block 5, and a bottom long horizontal plane of the trapezoidal soft abrasion-resistant sheet is buckle-mounted on the upper surface of the middle rail 2. The connecting convex block 5 is a connecting square block with an abrasion-resistant corrugated surface, and the abrasion-resistant corrugated surface comes into soft contact with or is separated from the abrasion-resistant convex block 4. The contact area between the abrasion-resistant convex block 4 and the arc convex block is increased, to further increase fixed friction in up and down directions between the upper rail 1 and the middle rail 2, reduce an axial moving speed, and achieve a silencing effect. Meanwhile, the abrasion-resistant convex block 4 is hollowly set, to ensure that the upper rail 1 and the middle rail 2 are opened or closed on the lower rail 3 in sequence, improve the transmission stability of the slide rail, and guarantee the normal use of a drawer.

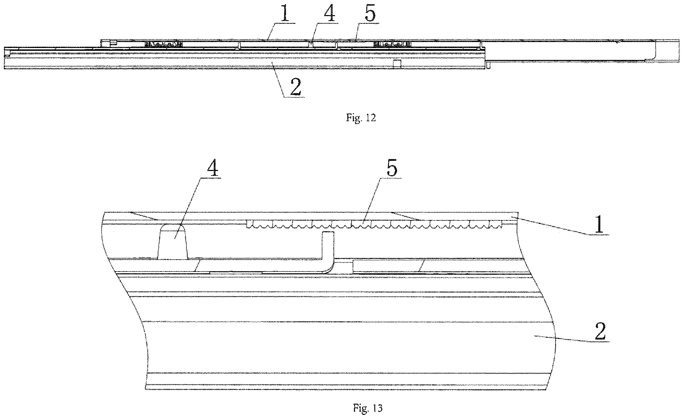

As shown in Fig. 12 and Fig. 13, embodiment 6 is different from the above-mentioned embodiment in that: the abrasion-resistant convex block 4 is at least one cylindrical soft abrasion-resistant sheet. The connecting convex block 5 is a connecting square block with an abrasion-resistant corrugated surface, and the abrasion-resistant corrugated surface comes into soft contact with or is separated from the abrasion-resistant convex block 4. The contact area between the abrasion-resistant convex block 4 and the arc convex block is increased, to further increase fixed friction in up and down directions between the upper rail 1 and the middle rail 2, reduce an axial moving speed, and achieve a silencing effect. Meanwhile, the abrasion-resistant convex block 4 is hollowly set, to ensure that the upper rail 1 and the middle rail 2 are opened or closed on the lower rail 3 in sequence, improve the transmission stability of the slide rail, and guarantee the normal use of a drawer.

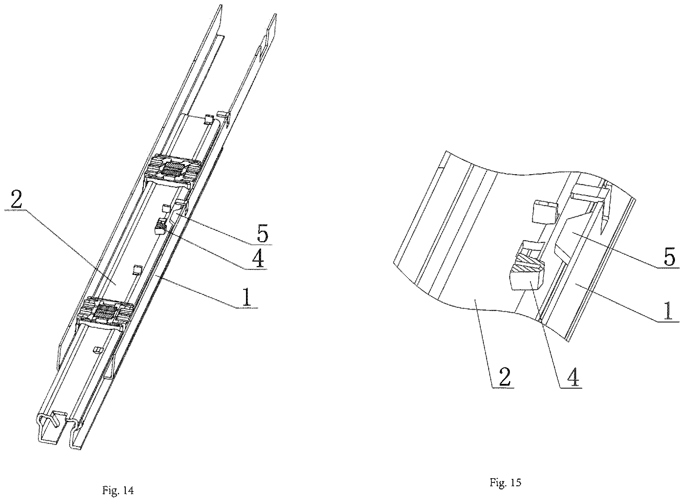

As shown in Fig. 14 and Fig. 15, embodiment 7 is different from the above-mentioned embodiment in that: the abrasion-resistant convex block 4 is located between the sliding connection of the transmission upper bead nest and is fixedly embedded at a left side or right side of the middle rail 2, and the connecting convex block 5 is integrated in one piece on an inner side surface of the upper rail 1 and comes into soft contact with or is separated from the abrasion-resistant convex block 4 as the upper rail 1 moves.

That is, during the opening or closing of the slide rail, the connecting convex block 5 comes into soft contact with the abrasion-resistant convex block 4 as the upper rail 1 axially moves, to increase fixed friction in left and right directions between the upper rail 1 and the middle rail 2, reduce an axial moving speed, and achieve a silencing effect. Then, under sufficient pushing force, the abrasion-resistant convex block 4 is deformed, so that the connecting convex block 5 goes over the abrasion-resistant convex block 4 and is separated from the abrasion-resistant convex block 4, to ensure that the upper rail 1 and the middle rail 2 are opened or closed on the lower rail 3 in sequence, improve the transmission stability of the slide rail, and guarantee the normal use of a drawer.

Wherein, the abrasion-resistant convex block 4 is at least one hollow trapezoidal soft abrasion-resistant sheet. A short horizontal plane at one side of the hollow trapezoidal soft abrasion-resistant sheet comes into contact with the connecting convex block 5, and a long horizontal plane at the other side of the hollow trapezoidal soft abrasion-resistant sheet is buckle-mounted at the left side or right side of the middle rail 2. The connecting convex block 5 is an arc convex block integrated in one piece with the inner side surface of the upper rail 1, and an arc surface of the arc convex block comes into soft contact with or is separated from the abrasion-resistant convex block 4. The contact area between the abrasion-resistant convex block 4 and the arc convex block is increased, to further increase fixed friction in left and right directions between the upper rail 1 and the middle rail 2, reduce an axial moving speed, and achieve a silencing effect. Meanwhile, the abrasion-resistant convex block 4 is hollowly set, to ensure that the upper rail 1 and the middle rail 2 are opened or closed on the lower rail 3 in sequence, improve the transmission stability of the slide rail, and guarantee the normal use of a drawer.

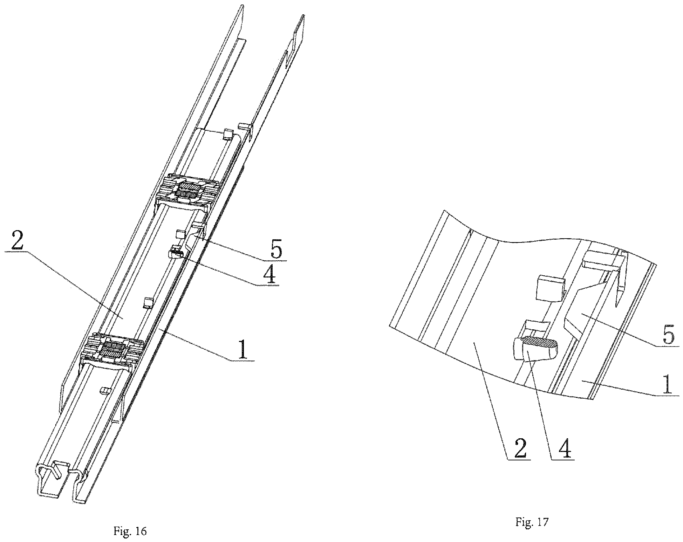

As shown in Fig. 16 and Fig. 17, embodiment 8 is different from the above-mentioned embodiment in that: the abrasion-resistant convex block 4 is at least one cylindrical soft abrasion-resistant sheet. The connecting convex block 5 is an arc convex block integrated in one piece with the inner side surface of the upper rail 1, and an arc surface of the arc convex block comes into soft contact with or is separated from the abrasion-resistant convex block 4, Fixed friction in left and right directions between the upper rail 1 and the middle rail 2 is further increased, to reduce an axial moving speed, and achieve a silencing effect; as well as ensure that the upper rail 1 and the middle rail 2 are opened or closed on the lower rail 3 in sequence, improve the transmission stability of the slide rail, and guarantee the normal use of a drawer.

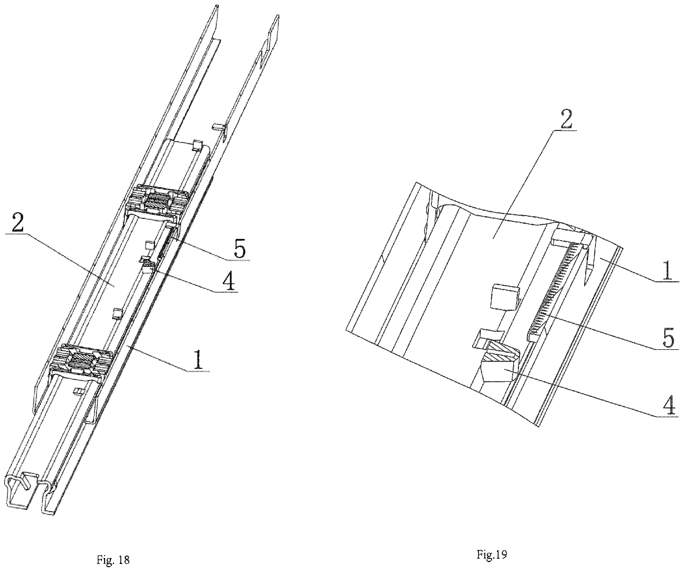

As shown in Fig. 18 and Fig. 19, embodiment 9 is different from the above-mentioned embodiment in that: the abrasion-resistant convex block 4 is at least one hollow trapezoidal soft abrasion-resistant sheet. A short horizontal plane at one side of the hollow trapezoidal soft abrasion-resistant sheet comes into contact with the connecting convex block 5, and a long horizontal plane at the other side of the hollow trapezoidal soft abrasion-resistant sheet is buckle-mounted at the left side or right side of the middle rail 2. The connecting convex block 5 is a connecting strip block with a plurality of tooth blocks, the connecting strip block is integrated in one piece on the inner side surface of the upper rail 1, and the plurality of tooth blocks come into soft contact with or are separated from the abrasion-resistant convex block 4. The contact area between the abrasion-resistant convex block 4 and the arc convex block is increased, to further increase fixed friction in left and right directions between the upper rail 1 and the middle rail 2, reduce an axial moving speed, and achieve a silencing effect; as well as ensure that the upper rail 1 and the middle rail 2 are opened or closed on the lower rail 3 in sequence, improve the transmission stability of the slide rail, and guarantee the normal use of a drawer.

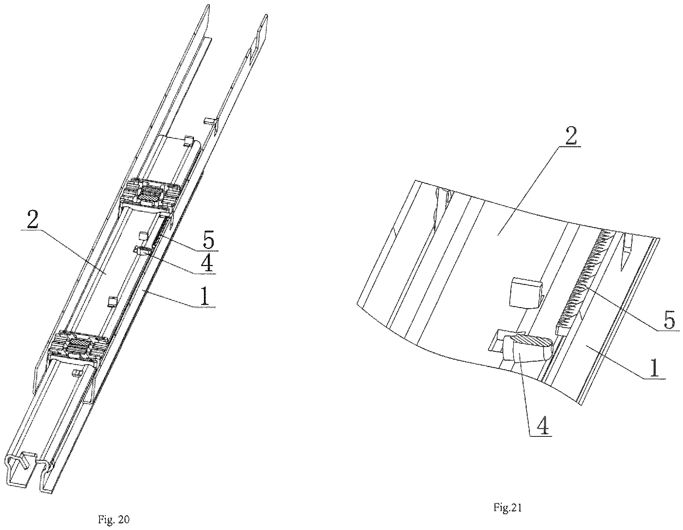

As shown in Fig. 20 and Fig. 21, embodiment 10 is different from the above-mentioned embodiment in that: the abrasion-resistant convex block 4 is at least one cylindrical soft abrasion-resistant sheet. The connecting convex block 5 is a connecting strip block with a plurality of tooth blocks, the connecting strip block is integrated in one piece on the inner side surface of the upper rail 1, and the tooth blocks come into soft contact with or are separated from the abrasion-resistant convex block 4. The contact area between the abrasion-resistant convex block 4 and the arc convex block is increased, to further increase fixed friction in left and right directions between the upper rail 1 and the middle rail 2, reduce an axial moving speed, and achieve a silencing effect; as well as ensure that the upper rail 1 and the middle rail 2 are opened or closed on the lower rail 3 in sequence, improve the transmission stability of the slide rail, and guarantee the normal use of a drawer.

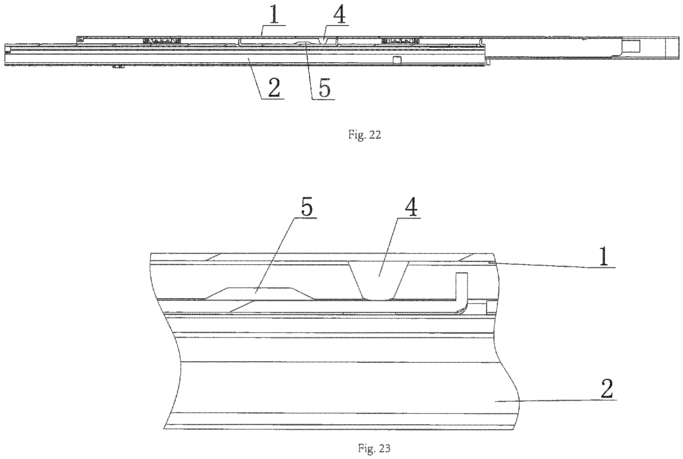

As shown in Fig. 22 and Fig. 23, embodiment 11 is different from the above-mentioned embodiment in that: the connecting convex block 5 is located between the sliding connection of the transmission upper bead nest and is integrated in one piece on an upper surface of the middle rail 2, and the abrasion-resistant convex block 4 is fixedly assembled on a bottom surface of the upper rail 1 and comes into soft contact with or is separated from the connecting convex block 5 as the upper rail 1 moves.

That is, during the opening or closing of the slide rail, the abrasion-resistant convex block 4 comes into soft contact with the connecting convex block 5 as the upper rail 1 axially moves, to increase fixed friction in up and down directions between the upper rail 1 and the middle rail 2, reduce an axial moving speed, and achieve a silencing effect. Then, under sufficient pushing force, the abrasion-resistant convex block 4 is deformed, so that the connecting convex block 5 goes over the abrasion-resistant convex block 4 and is separated from the abrasion-resistant convex block 4, to ensure that the upper rail 1 and the middle rail 2 are opened or closed on the lower rail 3 in sequence, improve the transmission stability of the slide rail, and guarantee the normal use of a drawer.

Wherein, the abrasion-resistant convex block 4 is at least one hollow trapezoidal soft abrasion-resistant sheet. A bottom short horizontal plane of the hollow trapezoidal soft abrasion-resistant sheet comes into contact with the connecting convex block 5, and a top long horizontal plane of the hollow trapezoidal soft abrasion-resistant sheet is buckle-mounted on a bottom of the upper rail 1. The connecting convex block 5 is an arc convex block integrated in one piece with the upper surface of the middle rail 2, and an arc surface of the arc convex block comes into soft contact with or is separated from the abrasion-resistant convex block 4. The contact area between the abrasion-resistant convex block 4 and the arc convex block is increased, to further increase fixed friction in up and down directions between the upper rail 1 and the middle rail 2, reduce an axial moving speed, and achieve a silencing effect. Meanwhile, the abrasion-resistant convex block 4 is hollowly set, to ensure that the upper rail 1 and the middle rail 2 are opened or closed on the lower rail 3 in sequence, improve the transmission stability of the slide rail, and guarantee the normal use of a drawer.

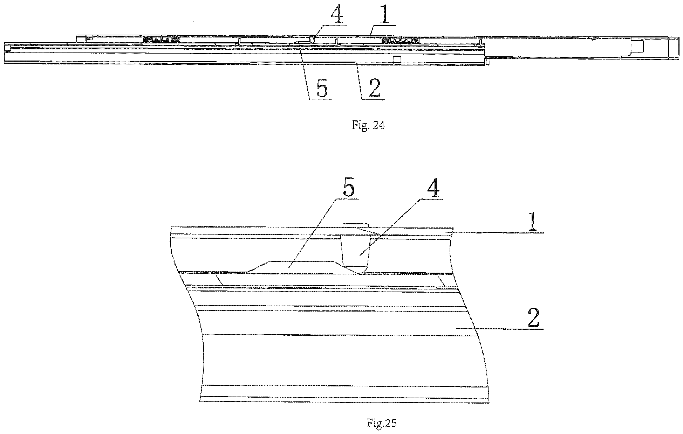

As shown in Fig. 24 and Fig. 25, embodiment 12 is different from the above-mentioned embodiment in that: the abrasion-resistant convex block 4 is at least one cylindrical soft abrasion-resistant sheet. The connecting convex block 5 is an arc convex block integrated in one piece with the upper surface of the middle rail 2, and an arc surface of the arc convex block comes into soft contact with or is separated from the abrasion-resistant convex block 4, to further increase fixed friction in up and down directions between the upper rail 1 and the middle rail 2, reduce an axial moving speed, and achieve a silencing effect; as well as ensure that the upper rail 1 and the middle rail 2 are opened or closed on the lower rail 3 in sequence, improve the transmission stability of the slide rail, and guarantee the normal use of a drawer.

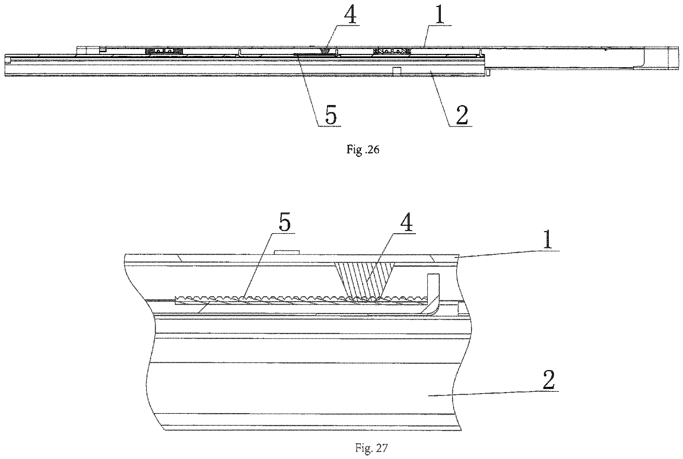

As shown in Fig. 26 and Fig. 27, embodiment 13 is different from the above-mentioned embodiment in that: the abrasion-resistant convex block 4 is at least one trapezoidal soft abrasion-resistant sheet. A bottom short horizontal plane of the trapezoidal soft abrasion-resistant sheet comes into contact with the connecting convex block 5, and a top long horizontal plane of the trapezoidal soft abrasion-resistant sheet is buckle-mounted on a bottom of the upper rail 1. The connecting convex block 5 is a connecting square block with an abrasion-resistant corrugated surface integrated in one piece with the upper surface of the middle rail 2, and the abrasion-resistant corrugated surface comes into soft contact with or is separated from the abrasion-resistant convex block 4. The contact area between the abrasion-resistant convex block 4 and the arc convex block is increased, to further increase fixed friction in up and down directions between the upper rail 1 and the middle rail 2, reduce an axial moving speed, and achieve a silencing effect; as well as ensure that the upper rail 1 and the middle rail 2 are opened or closed on the lower rail 3 in sequence, improve the transmission stability of the slide rail, and guarantee the normal use of a drawer.

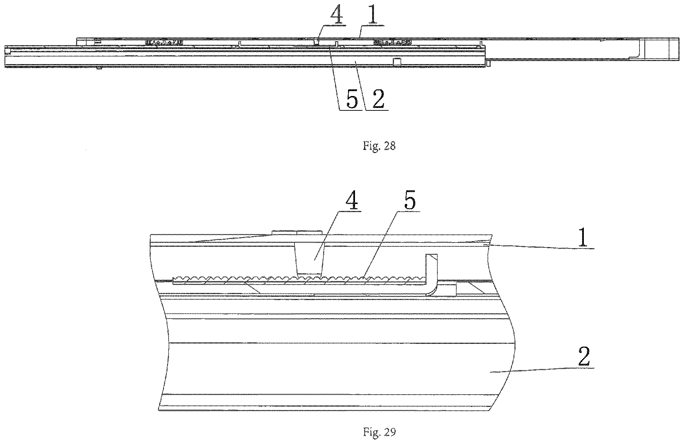

As shown in Fig. 28 and Fig. 29, embodiment 14 is different from the above-mentioned embodiment in that: the abrasion-resistant convex block 4 is at least one cylindrical soft abrasion-resistant sheet. The connecting convex block 5 is a connecting square block with an abrasion-resistant corrugated surface integrated in one piece with the upper surface of the middle rail 2, and the abrasion-resistant corrugated surface comes into soft contact with or is separated from the abrasion-resistant convex block 4. The contact area between the abrasion-resistant convex block 4 and the arc convex block is increased, to further increase fixed friction in up and down directions between the upper rail 1 and the middle rail 2, reduce an axial moving speed, and achieve a silencing effect; as well as ensure that the upper rail 1 and the middle rail 2 are opened or closed on the lower rail 3 in sequence, improve the transmission stability of the slide rail, and guarantee the normal use of a drawer.

It is worth noting that specifically, the abrasion-resistant convex block may be an abrasion-resistant block made of nonmetal abrasion-resistant material, such as abrasion-resistant plastic block, abrasion-resistant silicone block or the like.

The above specific embodiments are specific embodiments with good effects of the present invention. Any structure identical or similar to that of the buffer slide rail with a fixed friction silencing mechanism of present invention shall be covered in the protection scope of the present invention.

## Claims

1. A buffer slide rail with a fixed friction silencing mechanism, comprising an upper rail (1), a middle rail (2) and a lower rail (3) which are in sliding connection in sequence, wherein a transmission lower bead nest in transmission connection with the middle rail (2) is assembled on the lower rail (3), and a transmission upper bead nest in transmission connection with the upper rail (1) is assembled on the middle rail (2), wherein a fixed friction silencing assembly for reducing an axial moving speed is arranged between the connection of the upper rail (1) and the middle rail (2), the fixed friction silencing assembly including an abrasion-resistant convex block (4) and a connecting convex block (5), wherein the abrasion-resistant convex block (4) comes into soft contact with or is separated from the connecting convex block (5) as the upper rail (1) moves.

2. The buffer slide rail with a fixed friction silencing mechanism according to claim 1, **characterized in that** the abrasion-resistant convex block (4) is located between the sliding connection of the transmission upper bead nest and is fixedly buckle-mounted on an upper surface of the middle rail (2), and the connecting convex block (5) is integrated in one piece on a bottom surface of the upper rail (1) and comes into soft contact with or is separated from the abrasion-resistant convex block (4) as the upper rail (1) moves.

3. The buffer slide rail with a fixed friction silencing mechanism according to claim 1, **characterized in that** the abrasion-resistant convex block (4) is located between the sliding connection of the transmission upper bead nest and is fixedly embedded at a left side or right side of the middle rail (2), and the connecting convex block (5) is integrated in one piece on an inner side surface of the upper rail (1) and comes into soft contact with or is separated from the abrasion-resistant convex block (4) as the upper rail (1) moves.

4. The buffer slide rail with a fixed friction silencing mechanism according to claim 1, **characterized in that** the connecting convex block (5) is located between the sliding connection of the transmission upper bead nest and is integrated in one piece on an upper surface of the middle rail (2), and the abrasion-resistant convex block (4) is fixedly assembled on a bottom surface of the upper rail (1) and comes into soft contact with or is separated from the connecting convex block (5) as the upper rail (1) moves.

5. The buffer slide rail with a fixed friction silencing mechanism according to any one of claims 2-4, **characterized in that** the abrasion-resistant convex block (4) is at least one hollow trapezoidal soft abrasion-resistant sheet.

6. The buffer slide rail with a fixed friction silencing mechanism according to any one of claims 2-4, **characterized in that** the abrasion-resistant convex block (4) is at least one trapezoidal soft abrasion-resistant sheet.

7. The buffer slide rail with a fixed friction silencing mechanism according to any one of claims 2-4, **characterized in that** the abrasion-resistant convex block (4) is at least one cylindrical soft abrasion-resistant sheet.

8. The buffer slide rail with a fixed friction silencing mechanism according to any one of claims 2-4, **characterized in that** the connecting convex block (5) is at least one arc convex block, and an arc surface of the arc convex block comes into soft contact or is separated from the abrasion-resistant convex block (4).

9. The buffer slide rail with a fixed friction silencing mechanism according to any one of claims 2-4, **characterized in that** the connecting convex block (5) is a connecting square block with an abrasion-resistant corrugated surface, and the abrasion-resistant corrugated surface comes into soft contact with or is separated from the abrasion-resistant convex block (4).

10. The buffer slide rail with a fixed friction silencing mechanism according to any one of claims 2-4, **characterized in that** the connecting convex block (5) is a connecting strip block with a plurality of tooth blocks, and the plurality of tooth blocks come into soft contact with or are separated from the abrasion-resistant convex block (4).
